Europäisches Patentamt

European Patent Office

Office européen des brevets

(19)

(11) Publication number: **0 417 297 A1**

# EUROPEAN PATENT APPLICATION
## published in accordance with Art. 158(3) EPC

(21) Application number: **90901890.5**

(22) Date of filing: **17.01.90**

(86) International application number:
**PCT/JP90/00052**

(87) International publication number:
**WO 90/08993 (09.08.90 90/19)**

(51) Int. Cl.5: **G05B 19/417, G05B 19/18**

(30) Priority: **03.02.89 JP 26432/89**

(43) Date of publication of application:
**20.03.91 Bulletin 91/12**

(84) Designated Contracting States:
**DE FR GB**

(71) Applicant: **FANUC LTD.**
**3580, Shibokusa Aza-Komanba, Oshino-mura
Minamitsuru-gun, Yamanashi 401-05(JP)**

(72) Inventor: **OTSUKA, Shoichi Fanuc Mansion
Harimomi 7-302**
**3539-1, Shibokusa Oshinomura
Minamitsuru-gun
Yamanashi 401-05(JP)**
Inventor: **AKASHI, Seiji Fanuc Dai-3
Vira-karamatsu
3527-1, Shibokusa Oshinomura
Minamitsuru-gun
Yamanashi 401-05(JP)**

(74) Representative: **Brunner, Michael John et al
GILL JENNINGS & EVERY 53-64 Chancery
Lane
London WC2A 1HN(GB)**

(54) **NUMERIC CONTROLLER FOR TRANSFER LINE.**

(57) This invention relates to a numeric controller for a transfer line which incorporates a plurality of numeric controllers on the transfer line. The plurality of numeric controllers are connected through communication lines (L1, L2, L3) A, respectively, and have communication means which transmit the data of the present control state of their own to other numeric controllers and store the data of the control state of other numeric controllers that are sent thereto in memory means (28a,28b,28c), read out the data from the memory means (28a,28b,28c), judge the control state of other numeric controllers and decide the control content of their own. Accordingly, each numeric controller (2a, 2b, 2c) can reduce the time loss that occurs at the transition point of blocks between one execution and another and can reduce the tact time. Each CNC controller need not be equipped with a program for transmission and reception of signals and programming becomes easy.

FIG.1

## NUMERICAL CONTROL SYSTEM FOR TRANSFER LINES

Technical Field

This invention relates to a numerical control system for transfer lines having numerical control devices (CNC devices) incorporated therein, and more particularly, to a numerical control system for transfer lines capable of effecting an interaxis synchronous wait control in a multiple-axes and multiple-channel control.

Background Art

A CNC system for transfer lines having CNC devices incorporated therein is widely used as a control device for working machines and assembling/checking machines for mass-production lines, typically in the automobile industry.

Such a CNC system must have a sequence control function and an axis control function. The axis control function is mainly used for a multiple-axes and multiple-channel control and a synchronous wait function is indispensable thereto. In the prior art, the interaxis synchronous wait operation is effected by transferring an auxiliary function signal between the CNC devices. For example, this transfer operation is effected by transferring an M code between the CNC devices or by using a discrete DI/DO provided in a programmable controller (PC) in each of the CNC devices.

If a signal is transferred by using the DI/DO of the PC, as in the prior art, a waiting time is imposed due to the overhead for effecting the auxiliary functions, making it impossible to enhance the productivity of the mass production line. Namely, in the case of an existing single-axis CNC, the auxiliary function is effected after the axis is moved and the axis control then again effected, and accordingly, a time loss occurs between the execution of a previous axis control and the execution of the auxiliary function, making it difficult to reduce the tact time.

Further, since the CNC device is provided with a CNC program for each axis, it is necessary to provide a signal transfer program for each axis, and thus the programming becomes complicated.

Disclosure of the Invention

An object of this invention is to provide a numerical control system for transfer lines capable of effecting an interaxis synchronous wait control in a multiple-axes and multiple-channel control without increasing the size of the program and with the tact time reduced to a minimum.

To achieve the above object, according to this invention, there is provided a numerical control system for transfer lines having a plurality of numerical control devices incorporated into the transfer lines, characterized in that the numerical control devices are provided with communication means, respectively, which are connected to one another via communication lines and each of which transmits data indicating a present control state thereof to the other numerical control devices and stores transmitted data indicating control states of the other numerical control devices in a storing means, and that the numerical control devices each read out data from the storing means to determine the control states of the other numerical control devices, and determine a control content thereof.

The numerical control devices are provided, respectively, with communication means connected to one another via communication lines. Each of the numerical control devices transmits data indicating a present control state thereof to the other numerical control devices, via the communication means, and the communication means stores the transmitted data. Each of the numerical control devices reads out data stored in the communication means to determine the control states of the other numerical control devices, and determines the control content thereof based on the thus-determined control states. Accordingly, each of the numerical control devices can reduce the time loss occurring between the execution of controls and reduce the tact time. Further, none of the CNC devices is required to store a program for signal transmission/reception, making it possible to simplify the programming.

Brief Description of the Drawings

Fig. 1 is a diagram showing an entire construction of one embodiment of this invention; and

Fig. 2 is a diagram showing the connection relationship between input/output memories in Fig. 1.

Best Mode of Carrying Out the Invention

An embodiment of this invention will be described with reference to the accompanying drawings. In this embodiment, a single-axis controlling CNC device is explained as an example.

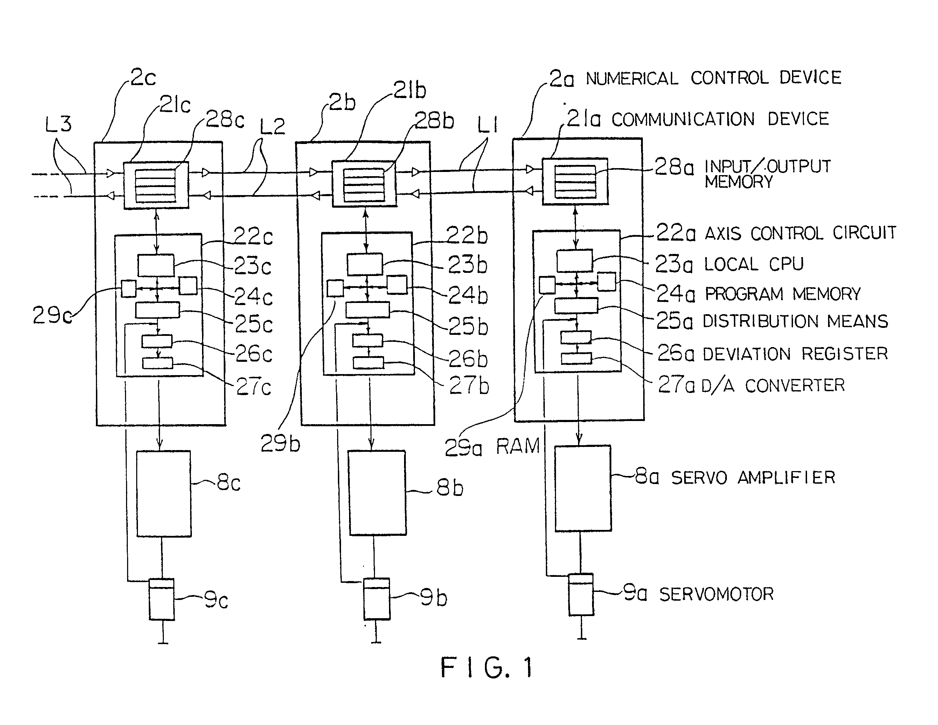

Figure 1 is a diagram showing an entire construction of one embodiment of this invention, wherein numerical control devices 2a, 2b and 2c are connected to one another via communication lines (RS-422) L1, L2 and L3. Optical cables can be used for the communication lines, to effect an optical communication. In the drawing, three numerical control devices are shown, but it is of course possible to connect more numerical control devices, depending on the state of the transfer lines.

Since the constructions of the numerical control device are the same, the numerical control device 2a alone is explained here.

The numerical control device 2a includes a communication device 21a and an axis control circuit 22a. The axis control circuit 22a is connected to a servomotor 9a via a servo amplifier 8a. The servomotor 9a is driven by the servo amplifier 8a.

The communication device 21a includes an input/output memory 28a for data communication. The input/output memory 28a stores data indicating the control states of the individual numerical control devices, as described later in detail.

The axis control circuit 22a includes a local CPU 23a, a program memory 24a, a distribution means 25a, a deviation register 26a, a D/A converter 27a, and a RAM 29a. The local CPU 23a globally controls the numerical control device 2a, the program memory 24a stores a control program, and the RAM 29a stores various data for the control operations. The distribution means 25a outputs a distribution pulse (command pulse) in accordance with a command from the CPU 23a, the deviation register 26a stores the difference between the distribution pulse and a feedback pulse from an encoder of the servomotor 9a, the D/A converter 27a outputs an analog voltage proportional to the difference output from the deviation register 26a, and the servo amplifier 8a controls the speed of the servomotor 9a in accordance with the output of the D/A converter 27a.

Communication between the numerical control devices 2a, 2b and 2c is effected by means of the input/output memory 28a of the communication device. Namely, the local CPU 23a of the numerical control device 2a writes the controlled state of the axis under its own control into the input/output memory 28a, and then, the written data is also written to the input/output memories 28b and 28c of the other numerical control devices 2b and 2c, by means of the communication devices 21a, 21b and 21c. Therefore, each numerical control device can acquire information on the control states of the other numerical control devices by reading out the data in the input/output memory of the communication device. The information written to the input/output memory includes data on a currently executed operation (machining of a workpiece, movement of a tool, suspension, or the like), position, speed, start/stop, etc.

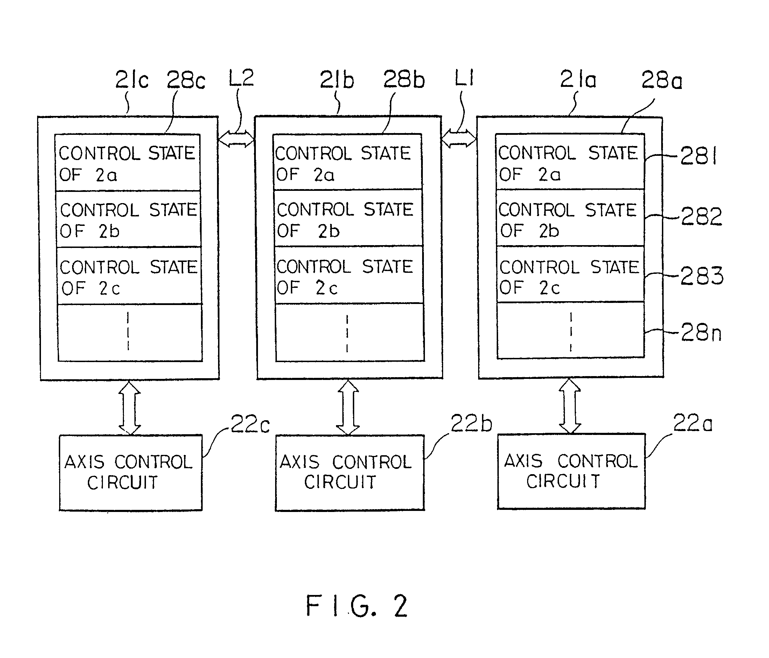

Figure 2 is a diagram showing the communication devices in Fig. 1 in more detail. In Fig. 2, like reference numerals are used to denote like elements in Fig. 1, and a description thereof is omitted. The memory area of the input/output memory 28a is divided, for the respective numerical control devices, into an area 281 for storing the control state of the numerical control device 2a, an area 282 for storing the control state of the numerical control device 2b, an area 283 for storing the control state of the numerical control device 2c, and areas 28n for storing the control states of other numerical control devices. The input/output memories 28b and 28c are each divided in the same manner.

The operation of writing data to the input/output memory 28a is carried out by the local CPU 23a. At this time, the input/output memory 28a can write data only to that area assigned for storing the control state thereof. Therefore, data is permitted to be written to only the memory area 281 of the input/output memory 28a, and the local CPU 23a cannot write data to the other memory areas 282 to 28n. Nevertheless, the local CPU 23a can freely read out data from the areas 282 to 28n, and this applies also to the other input/output memories.

The data written to the input/output memory 28a is written to the memory areas 281 of the input/output memories 28b and 28c via the communication lines L1 and L2. Accordingly, the local CPUs 23b and 23c of the numerical control devices 2b and 2c can acquire information on the latest control state of the numerical control device 2a, by reading data from the memory areas 281 of the input/output memories 28b and 28c. A similar operation is effected with respect to the memory areas 282 to 28n, to transfer data between the numerical control devices.

For example, the numerical control device 2a writes an "OK signal", which is a signal indicating that it can wait for another axis, to the memory area 281 of the input/output memory 28a, and as a result, the "OK signal" is written to the memory areas 281 of the other numerical control devices. Therefore, the numerical control device 2b can acquire information that the numerical control device 2a may wait for another axis, by reading the signal from the memory area 281 of the input/output memory 28b. When the numerical control device 2a receives the "OK signal" from another numerical control device 2b, the local CPU 23a reads the signal from the memory area 282 of the input/output memory 28a and determines whether or not the signal is the "OK signal".

In the above embodiment, the individual axes are controlled independently, but a two-axes drilling machine in which the axes controlled by the numerical control devices 2a and 2b may interfere with each other at right angles will be now described. In this case, since an area exists in which the tools interfere with each other, an exclusive axis control must be executed in that area. Therefore, the local CPU 23a of the numerical control device 2a writes data, indicating that the tool is now present in the interference area, to the memory area 281 of the input/output memory 28a. The local CPU 23b of the numerical control device 2b reads data in the memory area 281 of the input/output memory 28b and obtains information that the tool of the numerical control device 2a is present in the interference area. Further, the numerical control device 2a can read data indicating the state of the numerical control device 2b, from the input/output memory 28a, immediately before it enters the interference area.

In this embodiment, a single-axis controlling CNC device is explained as an example of the numerical control device, but it is obvious that the effects of this invention can be obtained when applied to other FA devices, such as an NC device for transfer lines or a robot control device.

As described above, according to this invention, an interaxis synchronous wait control can be effected at a high speed by using a simple program, and an effect such that the productivity of the transfer lines can be increased and the programming for an introduction of the transfer lines can be made in a short time, can be obtained.

## Claims

1. A numerical control system for transfer lines having a plurality of numerical control devices incorporated into the transfer lines,

    characterized in that said plurality of numerical control devices are provided, respectively, with communication means which are connected to one another via communication lines and each of which transmits data indicating a present control state thereof to other numerical control devices and stores transmitted data indicating control states of other numerical control devices to a storing means, and that said numerical control devices each read out data from the storing means to determine the control states of the other numerical control devices, and determine a control content thereof.

2. A numerical control system according to claim 1, characterized in that said numerical control device comprises a single-axis control numerical control device.

3. A numerical control system according to claim 1, characterized in that said numerical control device controls a two-axes drilling machine having two axes which may interfere with each other at right angles.

F I G. 1

2a NUMERICAL CONTROL DEVICE
21a COMMUNICATION DEVICE
28a INPUT/OUTPUT MEMORY
22a AXIS CONTROL CIRCUIT
23a LOCAL CPU
24a PROGRAM MEMORY
25a DISTRIBUTION MEANS
26a DEVIATION REGISTER
27a D/A CONVERTER
29a RAM
8a SERVO AMPLIFIER
9a SERVOMOTOR

L1
2b
21b
28b
22b 23b 24b 25b 26b 27b
29b
8b
9b

L2
2c
21c
28c
22c 23c 24c 25c 26c 27c
29c
8c
9c

L3

EP 0 417 297 A1

F I G. 2

# INTERNATIONAL SEARCH REPORT

## I. CLASSIFICATION OF SUBJECT MATTER (if several classification symbols apply, indicate all) ⁶

According to International Patent Classification (IPC) or to both National Classification and IPC

Int. Cl⁵     G05B19/417, 19/18

## II. FIELDS SEARCHED

### Minimum Documentation Searched ⁷

| Classification System | Classification Symbols |
|---|---|
| IPC | G05B19/417, 19/18, 19/02 |

### Documentation Searched other than Minimum Documentation to the Extent that such Documents are Included in the Fields Searched ⁸

| | |
|---|---|
| Jitsuyo Shinan Koho | 1971 - 1989 |
| Kokai Jitsuyo Shinan Koho | 1971 - 1989 |

## III. DOCUMENTS CONSIDERED TO BE RELEVANT ⁹

| Category * | Citation of Document, ¹¹ with indication, where appropriate, of the relevant passages ¹² | Relevant to Claim No. ¹³ |
|---|---|---|
| Y | JP, A, 57-17012 (Fujitsu Fanuc, Ltd.), 28 January 1982 (28. 01. 82), & WO, A, 8200211 & EP, A, 55301 | 1 - 3 |
| Y | JP, A, 58-92006 (Toshiba Corp.), 1 June 1983 (01. 06. 83), (Family: none) | 1 - 3 |
| Y | JP, A, 59-223047 (Omron Tateisi Electronics Co.), 14 December 1984 (14. 12. 84), (Family: none) | 1 - 3 |

* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| March 1, 1990 (01. 03. 90) | March 19, 1990 (19. 03. 90) |
| International Searching Authority | Signature of Authorized Officer |
| Japanese Patent Office | |

Form PCT ISA 210 (second sheet) (January 1985)